# EUROPEAN PATENT APPLICATION

(11) **EP 4 011 995 A1**
(43) Date of publication of application: **15.06.2022**
(21) Application number: 20851186.5
(22) Date of filing: 19.03.2020
(51) Int. Cl.: C09J 5/00, C09J 11/06, C09J 201/00, H01L 21/301

(54) **METHOD FOR PEELING ADHEREND, AND ADHESIVE COMPOSITION**

(30) Priority: 08.08.2019 JP 2019146121
(71) Applicant: Nitto Denko Corporation, Ibaraki-shi Osaka 567-8680 (JP)
(72) Inventor: NAGATA, Mizuho, Ibaraki-shi, Osaka 567-8680 (JP); TACHIKAWA, Yu, Ibaraki-shi, Osaka 567-8680 (JP); HIRANO, Keisuke, Ibaraki-shi, Osaka 567-8680 (JP); MATSUSHITA, Kiichiro, Ibaraki-shi, Osaka 567-8680 (JP)
(74) Representative: Hoffmann Eitle
(86) International application number: PCT/JP2020/012200
(87) International publication number: WO 2021/024542

(57) **Abstract**

A method for releasing an adherend of the present invention includes a first step and a second step. In the first step, a bonded product (100) including a pressure-sensitive adhesive layer (10), and an adherend (20) bonded thereto is prepared. The pressure-sensitive adhesive layer (10) includes a pressure-sensitive adhesive component and a gas generating agent. In the second step, a laser light (L) is irradiated to the pressure-sensitive adhesive layer (10)-side of the bonded product (100) to heat a part of the pressure-sensitive adhesive layer (10). A pressure-sensitive adhesive composition of the present invention is a composition used for forming the pressure-sensitive adhesive layer (10) in the method.

## Description

### TECHNICAL FIELD

The present invention relates to a method for releasing an adherend and a pressure-sensitive adhesive composition.

### BACKGROUND ART

A pressure-sensitive adhesive sheet including a heat-peeling type pressure-sensitive adhesive layer has been conventionally known. The heat-peeling type pressure-sensitive adhesive layer contains, for example, a heat-foaming agent which can generate foaming by heating. After the pressure-sensitive adhesive sheet is bonded to an adherend on the heat-peeling type pressure-sensitive adhesive layer, the pressure-sensitive adhesive layer is heated to make the heat-foaming agent generate foaming for peeling the adhesive sheet from the adherend. Thus, a pressure-sensitive adhesive force of the pressure-sensitive adhesive layer decreases, and the adherend is separated from the pressure-sensitive adhesive layer. The heat-peeling type pressure-sensitive adhesive sheet is, for example, described in Patent Document 1 below.

### Citation List

### Patent Document

Patent Document 1: Japanese Unexamined Patent Publication No. 2012-167178

### SUMMARY OF THE INVENTION

### PROBLEM TO BE SOLVED BY THE INVENTION

In the above-described operation for separation in a bonded product of a conventional heat-foaming type pressure-sensitive adhesive sheet and an adherend bonded thereto, the entire pressure-sensitive adhesive layer of the pressure-sensitive adhesive sheet is heated. For example, the bonded product is heated on a heat stage with a built-in heating block to heat the entire pressure-sensitive adhesive layer. Alternatively, the bonded product is heated in a heating oven, and the entire pressure-sensitive adhesive layer is heated. When a plurality of adherends are bonded to a heat-foaming type pressure-sensitive adhesive sheet, according to such a separation method, the pressure-sensitive adhesive layer is separated from all of the adherends.

The present invention provides a method suitable for selectively releasing a part of a plurality of adherends bonded to a pressure-sensitive adhesive layer from the pressure-sensitive adhesive layer, and a pressure-sensitive adhesive composition used therefor.

### MEANS FOR SOLVING THE PROBLEM

The present invention [1] includes a method for releasing an adherend including a first step of preparing a bonded product including a pressure-sensitive adhesive layer and a plurality of adherends bonded to the pressure-sensitive adhesive layer, the pressure-sensitive adhesive layer containing a pressure-sensitive adhesive component and a gas generating agent; and a second step of irradiating a laser light to the pressure-sensitive adhesive layer-side of the bonded product to heat a part of the pressure-sensitive adhesive layer.

In the second step of the present method, as described above, the laser light is irradiated to the pressure-sensitive adhesive layer to which the plurality of adherends are bonded. The irradiation of the laser light, which is a highly directional energy ray, is suitable for locally heating a part of a region of the pressure-sensitive adhesive layer, and is therefore suitable for heating a gas generating agent in a partial region of the pressure-sensitive adhesive layer to generate a gas. The method in which such laser light irradiation is carried out is suitable for selectively heating a region to which a part of the adherends are bonded, and is therefore suitable for selectively releasing a part of the adherends from the pressure-sensitive adhesive layer by lowering a pressure-sensitive adhesive force to the adherend in the region.

The present invention [2] includes the method for releasing an adherend described in the above-described [1], wherein a transmittance of the laser light in the pressure-sensitive adhesive layer is 85% or less.

Such a configuration is suitable for efficiently heating the pressure-sensitive adhesive layer and the gas generating agent contained therein by the laser light irradiation to generate a gas in the pressure-sensitive adhesive layer, and is therefore suitable for suppressing energy for releasing the adherend from the pressure-sensitive adhesive layer.

The present invention [3] includes the method for releasing an adherend described in the above-described [1] or [2], wherein a wavelength of the laser light is 351 nm or 355 nm.

The laser light having such a wavelength is practical as a highly directional laser light.

The present invention [4] includes a pressure-sensitive adhesive composition used for forming the pressure-sensitive adhesive layer in the method for releasing an adherend described in any one of the above-described [1] to [3].

The present invention [5] includes the pressure-sensitive adhesive composition described in the above-described [4], wherein the pressure-sensitive adhesive layer contains a component capable of absorbing the laser light.

Such a configuration is suitable for efficiently raising a temperature of the pressure-sensitive adhesive layer by the laser light irradiation in the second step, and is therefore suitable for efficiently heating the gas generating agent in the pressure-sensitive adhesive layer to generate a gas.

The present invention [6] includes the pressure-sensitive adhesive composition described in the above-described [5], wherein the component is an ultraviolet absorber.

Such a configuration is suitable for efficiently raising the temperature of the pressure-sensitive adhesive layer by the laser light irradiation, particularly when an ultraviolet laser is used as a laser light in the second step, and is therefore suitable for efficiently heating the gas generating agent in the pressure-sensitive adhesive layer to generate a gas.

The present invention [7] includes the pressure-sensitive adhesive composition described in any one of the above-described [4] to [6], wherein the gas generating agent is a gas generating particle.

The use of the gas generating particles as a gas generating agent is suitable for realizing an excellent pressure-sensitive adhesive force to the adherend by suppressing a gas generating agent content ratio in the pressure-sensitive adhesive layer to ensure a pressure-sensitive adhesive component content ratio, and also for ensuring a gas generation amount required on releasing the adherend while suppressing the gas generating agent content ratio.

The present invention [8] includes the pressure-sensitive adhesive composition described in the above-described [7], wherein the gas generating particle includes an azo compound particle.

The azo compound particles can be preferably used as the gas generating particles having a high gas generation ratio.

### BRIEF DESCRIPTION OF THE DRAWINGS

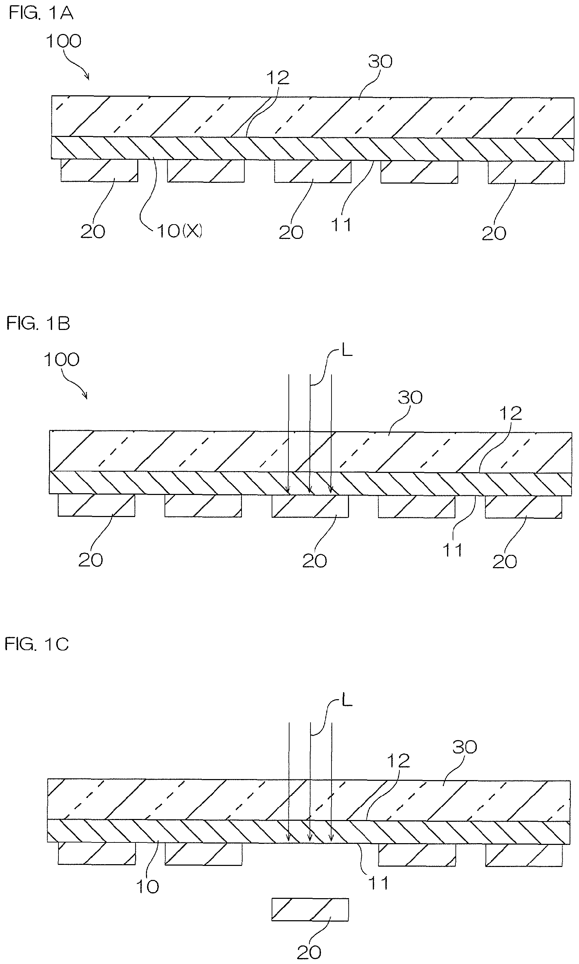

FIGS. 1A and 1B show one embodiment of a method for releasing an adherend of the present invention:
   FIG. 1A illustrating a first step of preparing a bonded product,
   FIG. 1B illustrating a second step of irradiating a laser light to the bonded product, and
   FIG. 1C illustrating a state of releasing an adherend from a pressure-sensitive adhesive layer.
FIG. 2A shows a step of preparing a pressure-sensitive adhesive layer, an adherend, and a transparent substrate,
   FIG. 2B shows a step of bonding the transparent substrate to the pressure-sensitive adhesive layer, and
   FIG. 2C shows a step of bonding the pressure-sensitive adhesive layer on the transparent substrate to the adherend.
FIG. 3 shows one modified example of a bonded product.

### DESCRIPTION OF EMBODIMENTS

FIGS. 1A and 1B show a cross-sectional schematic view of one embodiment of a method for releasing an adherend of the present invention. The method includes a first step and a second step shown below.

In the first step, as shown in FIG. 1A, a bonded product 100 is prepared. The bonded product 100 includes a pressure-sensitive adhesive layer 10 and a plurality of adherends 20. In this embodiment, the bonded product 100 further includes a transparent substrate 30 and has a multilayer structure including them. The pressure-sensitive adhesive layer 10 has a surface 11 and a surface 12 opposite thereto. Each of the adherends 20 is disposed so as to be in contact with the surface 11 of the pressure-sensitive adhesive layer 10. The plurality of adherends 20 are disposed spaced apart from each other on the surface 11 in an in-plane direction perpendicular to a thickness direction of the pressure-sensitive adhesive layer 10. The adherend 20 is, for example, a component or a member which is removed from the transparent substrate 30 after being joined to the transparent substrate 30 via the pressure-sensitive adhesive layer 10 and undergoing a predetermined process. The predetermined process includes, for example, processing and inspection of the adherend 20. Examples of the adherend 20 include electronic components such as semi-conductor components. Further, the transparent substrate 30 is disposed on the surface 12-side of the pressure-sensitive adhesive layer 10, and is preferably disposed so as to be in contact with the entire surface 12. The transparent substrate 30 functions as a support which supports the adherend 20, and examples thereof include transparent glass substrates and transparent resin substrates. A thickness of the transparent substrate 30 is, for example, 50 µm or more, preferably 100 µm or more, and is, for example, 10 mm or less, preferably 5 mm or less. A total light transmittance of the transparent substrate 30 is, for example, 90% or more, preferably 95% or more, more preferably 99% or more.

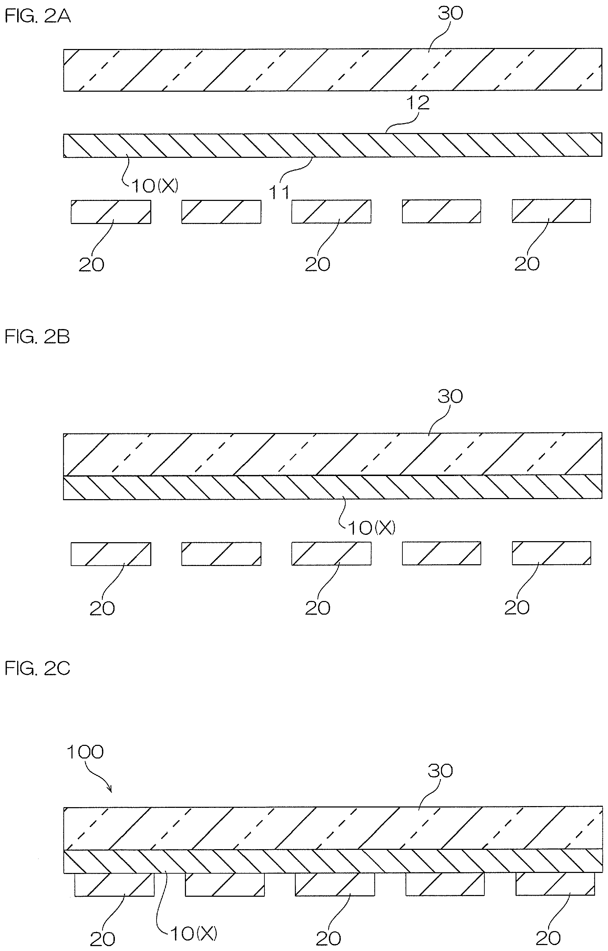

The bonded product 100 may be prepared, for example, as shown in FIG. 2. First, as shown in FIG. 2A, a pressure-sensitive adhesive sheet X, having the pressure-sensitive adhesive layer 10, the plurality of adherends 20 and the transparent substrate 30 are prepared. Next, as shown in FIG. 2B, the pressure-sensitive adhesive sheet X is bonded to the transparent substrate 30 on one side of the pressure-sensitive adhesive layer 10. Next, as shown in FIG. 2C, the plurality of adherends 20 are bonded to the other side of the pressure-sensitive adhesive layer 10 on the transparent substrate 30. In the adherend bonding step, the plurality of adherends 20 may be collectively bonded to the surface 11 of the pressure-sensitive adhesive layer 10, or bonding of each of the adherends 20 may be carried out for the plurality of adherends 20.

The pressure-sensitive adhesive layer 10 is a layer formed from a first pressure-sensitive adhesive composition containing a pressure-sensitive adhesive component and a gas generating agent which is vaporized by heating.

The pressure-sensitive adhesive component develops pressure-sensitive adhesive properties in the first pressure-sensitive adhesive composition. Examples of the pressure-sensitive adhesive component include pressure-sensitive adhesive polymers (base polymers) such as acrylic polymers, rubber-based polymers, silicone-based polymers, polyester-based polymers, polyamide-based polymers, urethane-based polymers, and styrene-diene block-based polymers. The pressure-sensitive adhesive component is preferably an acrylic polymer.

The acrylic polymer is, for example, a polymer obtained by polymerization of monomer components containing an alkyl (meth)acrylate as a main monomer and containing a polar group-containing vinyl monomer as a secondary monomer. "(Meth)acrylate" refers to an acrylic acid and/or a methacrylic acid.

An example of the alkyl (meth)acrylate includes an alkyl (meth)acrylate having a straight-chain or branched alkyl group having 1 to 18 carbon atoms. Examples of the alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, sec-butyl (meth)acrylate, tert-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, and octadecyl (meth)acrylate. These alkyl (meth)acrylates may be used alone or in combination of two or more. When two or more kinds thereof are used in combination, preferably, a methyl methacrylate (MMA) and an alkyl acrylate having an alkyl group having 2 to 18 carbon atoms are used in combination, more preferably, MMA, an ethyl acrylate, and a 2-ethylhexyl acrylate are used in combination.

A polar group-containing vinyl monomer is a copolymerizable monomer which is copolymerizable with a main monomer. Examples of the polar group-containing vinyl monomer include hydroxyl group-containing vinyl monomers such as hydroxymethyl (meth)acrylate, hydroxyethyl (meth)acrylate, hydroxypropyl (meth)acrylate, and hydroxybutyl (meth)acrylate. Examples of the polar group-containing vinyl monomer also include carboxyl group-containing vinyl monomers such as (meth)acrylate, amide group-containing vinyl monomers such as (meth)acrylamide, amino group-containing vinyl monomers such as aminoethyl (meth)acrylate, glycidyl group-containing vinyl monomers such as glycidyl (meth)acrylate, cyano group-containing vinyl monomers such as (meth)acrylonitrile, and heterocyclic ring-containing vinyl monomers such as N-vinyl-2-pyrrolidone. As the polar group-containing vinyl monomer, preferably, a hydroxyl group-containing vinyl monomer is used, more preferably, a hydroxyethyl acrylate is used.

A ratio of the main monomer in the monomer components for forming the acrylic polymer is preferably 50% by mass or more, more preferably 60% by mass or more, and is preferably 99% by mass or less, more preferably 95% by mass or less from the viewpoint of appropriately developing basic properties such as pressure-sensitive adhesive properties of the pressure-sensitive adhesive layer 10. A ratio of the secondary monomer in the monomer components is preferably 1% by mass or more, and is preferably 20% by mass or less.

A content ratio of the base polymer in the first pressure-sensitive adhesive composition is preferably 10% by mass or more, more preferably 20% by mass or more from the viewpoint of ensuring pressure-sensitive adhesive properties of the first pressure-sensitive adhesive composition. Also, the content ratio thereof is preferably 99% by mass or less, more preferably 95% by mass or less.

The pressure-sensitive adhesive component may contain another component in addition to the base polymer. Examples of the other component include cross-linking agents and tackifiers.

Examples of the cross-linking agent include isocyanate-based cross-linking agents, epoxy-based cross-linking agents, and metal ion-based cross-linking agents, and preferably, an isocyanate-based cross-linking agent is used. A content ratio of the cross-linking agent is preferably 0.01 parts by mass or more, more preferably 0.3 parts by mass or more, and is preferably 10 parts by mass or less, more preferably 3 parts by mass or less with respect to 100 parts by mass of the base polymer of the pressure-sensitive adhesive component.

Examples of the tackifier include rosin-based resins, rosin phenol-based resins, terpene-based resins, and petroleum-based resins, and preferably, a rosin phenol-based resin is used. A content ratio of the tackifier is preferably 1 part by mass or more, more preferably 5 parts by mass or more, and is preferably 30 parts by mass or less with respect to 100 parts by mass of the base polymer of the pressure-sensitive adhesive component.

A content ratio of the adhesive component in the first pressure-sensitive adhesive composition is preferably 10% by mass or more, more preferably 20% by mass or more from the viewpoint of ensuring the pressure-sensitive adhesive properties of the first pressure-sensitive adhesive composition. Also, the content ratio thereof is preferably 99% by mass or less, more preferably 95% by mass or less.

Examples of the gas generating agent include gas generating particles which are dispersed as particles without being dissolved in the pressure-sensitive adhesive component, and a dissolving-type gas generating agent which is dissolved in the pressure-sensitive adhesive component.

Examples of the gas generating particles include particles of a heat-foaming agent which is easily gasified by heating. Examples of the heat-foaming agent include organic foaming agents and inorganic foaming agents. These heat-foaming agents may be used alone or in combination of two or more.

Examples of the organic foaming agent include azo-based foaming agents, N-nitroso-based foaming agents, hydrazide-based foaming agents, semicarbazide-based foaming agents, fluorinated alkane-based foaming agents, and triazole-based foaming agents. Examples of the azo-based foaming agent include azodicarbonamide (ADCA), barium azodicarboxylate, azobisisobutyronitrile (AIBN), azocyclohexylnitrile, and azodiaminobenzene. Examples of the N-nitroso-based foaming agent include N,N'-dinitrosopentamethylenetetramine (DTP), N,N'-dimethyl-N,N'-dinitrosoterephthalamide, and trinitrosotrimethyltriamine. Examples of the hydrazide-based foaming agent include 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide) ether, benzene-1,3-disulfonylhydrazide, and allylbis(sulfonylhydrazide). Examples of the semicarbazide-based foaming agent include p-toluylenesulfonyl semicarbazide and 4,4'-oxybis(benzenesulfonylsemicarbazide). Examples of the fluorinated alkane-based foaming agent include trichloromonofluoromethane and dichloromonofluoromethane. An example of the triazole-based foaming agent includes 5-morpholyl-1,2,3,4-thiatriazole.

Examples of the inorganic foaming agent include hydrogen carbonates such as sodium hydrogen carbonate and ammonium hydrogen carbonate, carbonates such as sodium carbonate and ammonium carbonate, nitrites such as sodium nitrite and ammonium nitrite, and borohydride salts such as sodium borohydride.

The gas generating particles are preferably particles of an organic foaming agent, more preferably particles of an azo-based foaming agent (azo compound particles), further more preferably ADCA particles. Examples of a commercially available product of the ADCA particles include the Vinyfor series and the FE series (hereinabove, manufactured by EIWA CHEMICAL IND. CO., LTD.). Unlike the hydrazide-based foaming agent such as OBSH, since the azo-based foaming agent such as ADCA has less foaming agent residue after heat-foaming, it is suitable for suppressing contamination of an adherend to be described later.

Examples of a shape of the gas generating particles include a generally spherical shape, a generally plate (flat) shape, a generally needle shape, and an amorphous shape.

An average particle size of the gas generating particles is, for example, 1000 µm or less, preferably 100 µm or less, more preferably 10 µm or less, particularly preferably 7.5 µm or less, most preferably 5 µm or less from the viewpoint of uniformly generating gas in the pressure-sensitive adhesive layer 10. Further, the average particle size of the gas generating particles is preferably 0.1 µm or more from the viewpoint of reducing a content ratio of a dispersant to be described later for finely dispersing the gas generating particles.

Examples of the dissolving-type gas generating agent include azide group-containing polymers such as a glycidyl azide polymer obtained by ring-opening polymerization of 3-azidomethyl-3-methyloxetanes. In addition, for example, a dissolving-type gas generating agent described in Japanese Unexamined Patent Publication No. 2003-231867 may be used.

A gas generation amount of the gas generating agent is, for example, 50 ml/g or more, preferably 100 ml/g or more, more preferably 125 ml/g or more, and is, for example, 1000 ml/g or less.

A content ratio of the gas generating agent is preferably 1 part by mass or more, more preferably 10 parts by mass or more, further more preferably 20 parts by mass or more with respect to 100 parts by mass of the base polymer of the pressure-sensitive adhesive component from the viewpoint of ensuring a gas generation amount in the pressure-sensitive adhesive layer 10. In addition, the content ratio of the gas generating agent is preferably 100 parts by mass or less, more preferably 80 parts by mass or less, further more preferably 60 parts by mass or less with respect to 100 parts by mass of the base polymer of the pressure-sensitive adhesive component from the viewpoint of ensuring an amount of the pressure-sensitive adhesive component in the pressure-sensitive adhesive layer 10.

The first pressure-sensitive adhesive composition may contain another component in addition to the pressure-sensitive adhesive component and the gas generating agent. Examples of the other component include dispersants, laser light absorbers, and pigments.

The dispersant improves dispersibility of the gas generating particles in the first pressure-sensitive adhesive composition. Examples of the dispersant include polymer-type dispersants. Examples of a commercially available product of the dispersant include the FLOWLEN DOPA series (manufactured by KYOEISHA CHEMICAL CO., LTD.), the Solsperse series (manufactured by The Lubrizol Corporation), the EFKA Series (manufactured by EFKA Additives), the Disper BYK Series (manufactured by BYK JAPAN KK), and the DISPARLON series (manufactured by Kusumoto Chemicals, Ltd.).

A content ratio of the dispersant is preferably 10 parts by mass or more, more preferably 30 parts by mass or more, and is preferably 100 parts by mass or less, more preferably 70 parts by mass or less with respect to 100 parts by mass of the gas generating particles.

The laser light absorber is a component which is capable of absorbing the laser light used in the second step to be described later, and changing the absorbed energy into heat or infrared light to be released. When an ultraviolet laser is used as a laser light in the second step, the laser light absorber is preferably an ultraviolet absorber. A content ratio of the laser light absorber is preferably 1 part by mass or more, more preferably 3 parts by mass or more, and is preferably 40 parts by mass or less, more preferably 30 parts by mass or less with respect to 100 parts by mass of the base polymer of the pressure-sensitive adhesive component.

Examples of the ultraviolet absorber include benzophenone-based ultraviolet absorbers, benzotriazole-based ultraviolet absorbers, salicylate ester-based ultraviolet absorbers, and cyanoacrylate-based ultraviolet absorbers, and preferably, a benzophenone-based ultraviolet absorber is used. The pressure-sensitive adhesive component may contain one kind of ultraviolet absorber or may contain two or more kinds of ultraviolet absorbers.

Examples of the benzophenone-based ultraviolet absorber include 2,4-dihydroxybenzophenone, 2-hydroxy-4-methoxybenzophenone, 2-hydroxy-4-methoxybenzophenone-5-sulfonic acid, 2-hydroxy-4-octyloxybenzophenone, 4-dodecyloxy-2-hydroxybenzophenone, 4-benzyloxy-2-hydroxybenzophenone, 2,2'-dihydroxy-4-methoxybenzophenone, 2,2',4,4'-tetrahydroxybenzophenone, and 2,2'-dihydroxy-4,4'-dimethoxybenzophenone.

Examples of the benzotriazole-based ultraviolet absorber include 2-(2-hydroxy-5-tert-butylphenyl)-2H-benzotriazole, an alkyl ester having 7 to 9 carbon atoms of benzenepropanoate-3-(2H-benzotriazole-2-yl)-5-(1,1-dimethylethyl)-4-hydroxy, 2-(2H-benzotriazole-2-yl)-4,6-bis(1-methyl-1-phenylethyl)phenol, 2-(2H-benzotriazole-2-yl)-6-(1-methyl-1-phenylethyl)-4-(1,1,3,3-tetramethylbuthyl)phenol, 2-(2H-benzotriazole-2-yl)-p-cresol, 2-(2H-benzotriazole-2-yl)-4,6-bis(1-methyl-1-phenylethyl)phenol, 2-[5-chloro-2H-benzotriazol-2-yl]-4-methyl-6-(tert-butyl)phenol, 2-(2H-benzotriazole-2-yl)-4,6-di-tert-pentylphenol, and 2-(2H-benzotriazole-2-yl)-4-(1,1,3,3-tetramethylbutyl)phenol.

Examples of the salicylate ester-based ultraviolet absorber include phenyl-2-acryloyloxybenzoate, phenyl-2-acryloyloxy-3-methylbenzoate, phenyl-2-acryloyloxy-4-methylbenzoate, phenyl-2-acryloyloxy-5-methylbenzoate, phenyl-2-acryloyloxy-3 -methoxybenzoate, phenyl-2-hydroxybenzoate, phenyl-2-hydroxy-3-methylbenzoate, phenyl-2-hydroxy-4-methylbenzoate, phenyl-2-hydroxy-5-methylbenzoate, phenyl-2-hydroxy-3-methoxybenzoate, and 2,4-di-tert-butylphenyl-3,5-di-tert-butyl-4-hydroxybenzoate.

Examples of the cyanoacrylate-based ultraviolet absorber include alkyl-2-cyanoacrylate, cycloalkyl-2-cyanoacrylate, alkoxyalkyl-2-cyanoacrylate, alkenyl-2-cyanoacrylate, and alkynyl-2-cyanoacrylate.

A content ratio of the laser light absorber such as an ultraviolet absorber is preferably 1 part by mass or more, more preferably 3 parts by mass or more, and is preferably 50 parts by mass or less, more preferably 20 parts by mass or less with respect to 100 parts by mass of the base polymer of the pressure-sensitive adhesive component.

The maximum gas generation amount per cm² of the pressure-sensitive adhesive layer 10 containing a gas generating agent is preferably 2 µl/cm² or more, more preferably 5 µl/cm² or more from the viewpoint of ensuring the releasability of an adherend in the second step to be described later. Also, the maximum gas generation amount is, for example, 50 µl/cm² or less, preferably 40 µl/cm² or less. The maximum gas generation amount per cm² of the pressure-sensitive adhesive layer 10 refers to an amount, expressed by the volume under the conditions of 0°C and 1 atm, of gas generated in assuming that all of the gas generating agents contained in per cm² of the pressure-sensitive adhesive layer 10 are gasified. A specific calculation method for the maximum gas generation amount is described in Examples to be described later.

The maximum gas generation amount per gram of the solid content of the first pressure-sensitive adhesive composition forming the pressure-sensitive adhesive layer 10 is preferably 5 ml/g or more, more preferably 10 ml/g or more from the viewpoint of ensuring the releasability of an adherend in the second step to be described later. Also, the gas generation amount is preferably 50 ml/g or less, more preferably 40 ml/g or less. The maximum gas generation amount per gram of the solid content of the first pressure-sensitive adhesive composition refers to an amount, expressed by the volume under the conditions of 0°C and 1 atm, of gas generated in assuming that all of the gas generating agents contained in per gram of the solid content in the first pressure-sensitive adhesive composition are gasified.

A thickness of the pressure-sensitive adhesive layer 10 is preferably 1 µm or more, more preferably 5 µm or more, further more preferably 10 µm or more, particularly preferably 20 µm or more from the viewpoint of ensuring a pressure-sensitive adhesive force to the adherend 20. The thickness of the adhesive layer 10 is preferably 200 µm or less, more preferably 100 µm or less, further more preferably 50 µm or less from the viewpoint of ensuring a transmittance of the laser light irradiated in the second step to be described later. The thickness of the pressure-sensitive adhesive layer 10 is a distance between the surface 11 and the surface 12 of the pressure-sensitive adhesive layer 10.

A transmittance of the laser light to be described later in the pressure-sensitive adhesive layer 10 is preferably 85% or less, more preferably 60% or less, more preferably 55% or less, more preferably 40% or less, more preferably 20% or less, more preferably 5% or less, more preferably 2% or less. The transmittance of the pressure-sensitive adhesive layer 10 can be, for example, adjusted by the monomer composition and the amount of the base polymer in the pressure-sensitive adhesive layer 10, the kind and the amount of the gas generating agent in the pressure-sensitive adhesive layer 10, and the thickness of the pressure-sensitive adhesive layer 10.

Each of the pressure-sensitive adhesive component, the gas generating agent, and other components blended as required are prepared and then, mixed, so that the first pressure-sensitive adhesive composition can be prepared. When the gas generating particles are used as the gas generating agent, a dispersion liquid obtained by dispersing the gas generating particles in an organic solvent (dispersion medium), and a pressure-sensitive adhesive component are mixed to prepare the first pressure-sensitive adhesive composition.

Examples of the organic solvent include ethyl acetate, butyl acetate, acetone, methyl ethyl ketone, methyl isobutyl ketone, benzene, toluene, xylene, methanol, ethanol, isopropanol, ethylene glycol monomethyl ether acetate, propylene glycol monomethyl ether acetate, dichloromethane, and chloroform.

A content ratio of the organic solvent in the dispersion liquid is adjusted so that a content ratio of the gas generating particles in the dispersion liquid is, for example, 1% by mass or more, preferably 5% by mass or more, and is, for example, 50% by mass or less, preferably 30% by mass or less.

The gas generating particles may be dispersed in the organic solvent in the presence of the above-described dispersant. Further, the gas generating particles may be dispersed, preferably together with a dispersant, in the organic solvent using a dispersing machine such as a mill including a bead mill.

By applying the first pressure-sensitive adhesive composition thus obtained onto a substrate sheet to form a coating film, and then, by drying the coating film to remove the organic solvent as required, the pressure-sensitive adhesive layer 10 consisting of the solid content of the pressure-sensitive adhesive composition can be formed as the pressure-sensitive adhesive sheet X. The exposed surface of the pressure-sensitive adhesive layer 10 on the substrate sheet may be covered with another substrate sheet. These substrate sheets are peeled from the pressure-sensitive adhesive sheet X in preparing the above-described bonded product 100. Examples of the substrate sheet include plastic-based substrate sheets such as polyethylene terephthalate (PET) sheets, polyethylene sheets, polypropylene sheets, polyvinyl chloride sheets, polyimide sheets, polyamide sheets, and rayon sheets.

In the second step in the method for releasing an adherend, as shown in FIG. 1B, a laser light L is irradiated to the pressure-sensitive adhesive layer 10-side of the bonded product 100 to heat a part of a region of the pressure-sensitive adhesive layer 10. In this step, the laser light L is irradiated to a partial region of the pressure-sensitive adhesive layer 10 to which a part of the plurality of adherends 20 are bonded. The laser light irradiation site or spot may be swept over a predetermined region of the pressure-sensitive adhesive layer 10. In addition, a part of the adherends 20 may be one adherend 20 or two or more adherends 20. In FIG. 1B, a case where the laser light L is irradiated to a partial region of the pressure-sensitive adhesive layer 10 to which one adherend 20 of the plurality of adherends 20 is bonded is illustrated as one example of the second step.

The laser light used in this step is preferably an ultraviolet laser, and is more preferably a laser light having a wavelength of 351 nm or a laser light having a wavelength of 355 nm. The laser light having such an ultraviolet region wavelength is practical as a highly directional laser light.

In this step, the gas generating agent in the heating region is heated by partial heating of the pressure-sensitive adhesive layer 10 to generate a gas, and a pressure-sensitive adhesive force to the adherend 20 decreases in the region of the pressure-sensitive adhesive layer 10. As a result, as shown in FIG. 1C, the adherend 20 is selectively released from the pressure-sensitive adhesive layer 10. By repeating such a second step, predetermined two or more adherends 20 may be selectively peeled in a desired order.

In the second step of the present method, as described above, the laser light L is irradiated to the pressure-sensitive adhesive layer 10 to which the plurality of adherends 20 are bonded. The irradiation of the laser light L, which is a highly directional energy ray, is suitable for partially heating the pressure-sensitive adhesive layer 10, and is therefore suitable for heating the gas generating agent in a partial region of the pressure-sensitive adhesive layer 10 to generate a gas. The present method in which such laser light L irradiation is carried out is suitable for selectively heating a region to which a part of the plurality of adherends 20 are bonded in the pressure-sensitive adhesive layer 10, and is therefore suitable for selectively releasing a part of the adherends 20 from the pressure-sensitive adhesive layer 10 by decreasing the pressure-sensitive adhesive force to the adherend in the region.

As described above, a transmittance of the laser light L (irradiated laser light in the second step) in the pressure-sensitive adhesive layer 10 is preferably 85% or less, more preferably 60% or less, more preferably 55% or less, more preferably 40% or less, more preferably 20% or less, more preferably 5% or less, more preferably 2% or less. Such a configuration is suitable for efficiently heating the pressure-sensitive adhesive layer 10 and the gas generating agent contained therein by the laser light irradiation to generate a gas in the pressure-sensitive adhesive layer 10, and is therefore suitable for suppressing energy for selectively releasing the adherend 20 from the pressure-sensitive adhesive layer 10. The irradiation energy of the laser light used in the second step is preferably 1500 mJ/cm² or less, more preferably 850 mJ/cm² or less, further more preferably 650 mJ/cm² or less, particularly preferably 400 mJ/cm² or less.

In the second step, the laser light L for heating is irradiated to the pressure-sensitive adhesive layer 10-side of the bonded product 100 where the adhesive layer 10 has an irradiation laser light transmittance of 60% or less. Such a configuration is suitable for suppressing a thermal load of the adherend 20.

As described above, the first pressure-sensitive adhesive composition forming the pressure-sensitive adhesive layer 10 preferably contains a component capable of absorbing the laser light L. In particular, when an ultraviolet laser is used as the above-described laser light L, the component is preferably an ultraviolet absorber. In the second step, these configurations are suitable for efficiently raising the temperature of the pressure-sensitive adhesive layer 10 by irradiation of the laser light L such as an ultraviolet laser, and is therefore suitable for efficiently heating the gas generating agent in the pressure-sensitive adhesive layer 10 to generate a gas.

As described above, the gas generating agent in the pressure-sensitive adhesive layer 10 is preferably the gas generating particles, more preferably azo compound particles. The configuration in which the pressure-sensitive adhesive layer 10 contains the gas generating agent having a large gas generation amount is suitable for realizing an excellent pressure-sensitive adhesive force to the adherend by suppressing a gas generating agent content ratio in the pressure-sensitive adhesive layer 10 to ensure a pressure-sensitive adhesive component content ratio, and also for ensuring a gas generation amount on releasing the adherend while suppressing the gas generating agent content ratio.

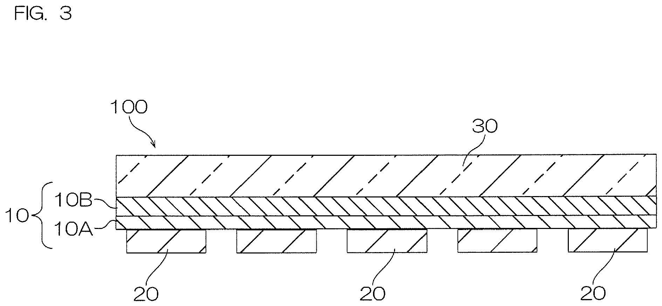

As shown in FIG. 3, the pressure-sensitive adhesive layer 10 of the bonded product 100 may have a two-layer configuration of a first layer 10A located on the adherend 20-side and a second layer 10B located on the transparent substrate 30-side, instead of the single layer configuration described above. The first layer 10A is a layer formed from the above-described first pressure-sensitive adhesive composition, and the component composition thereof is the same as that described above regarding the pressure-sensitive adhesive layer 10. The second layer 10B is a layer which does not contain a gas generating agent, and is, for example, a layer formed from a second pressure-sensitive adhesive composition having the same component composition as the first pressure-sensitive adhesive composition except that it contains no gas generating agent. According to such a modified example, it is possible to ensure the pressure-sensitive adhesive force of the pressure-sensitive adhesive layer 10 with respect to the adherend 20 by ensuring the thickness of the pressure-sensitive adhesive layer 10, while appropriately decreasing a pressure-sensitive adhesive force on the adherend 20-side of the pressure-sensitive adhesive layer 10 in the above-described second step. In this modified example, the maximum gas generation amount per cm² of the pressure-sensitive adhesive layer 10 refers to an amount, expressed by the volume under the conditions of 0°C and 1 atm, of gas generated in assuming that all of the gas generating agents contained in per cm² of the pressure-sensitive adhesive layer 10 including the first layer 10A and the second layer 10B are gasified.

### Examples

### [Example 1]

### <Preparation of Gas Generating Particle Dispersion Liquid>

A mixture containing 20 g of gas generating particles (trade name "FE-788", ADCA particles, average particle size of 6 µm, gas generation amount of 135 mL/g, manufactured by EIWA CHEMICAL IND. CO., LTD.), 10 g of a dispersant (trade name "FLOWLEN DOPA-100", manufactured by KYOEISHA CHEMICAL CO., LTD.), and 70 g of an ethyl acetate was stirred with a bead mill for one hour to pulverize the gas generating particles. Thus, a gas generating particle dispersion liquid containing the ADCA particles having an average particle size of 0.5 µm as gas generating particles was obtained.

### <Fabrication of Pressure-Sensitive Adhesive Sheet>

A coating liquid (varnish) was prepared by uniformly mixing 100 parts by mass of an acrylic polymer (trade name "SK-1811L", manufactured by Soken Chemical & Engineering Co., Ltd.), 3 parts by mass of an isocyanate-based cross-linking agent (trade name "CORONATE L", manufactured by Nippon Polyurethane Industry Co., Ltd.), 125 parts by mass of a gas generating particle dispersion liquid (containing 25 parts by mass of gas generating particles), 10 parts by mass of a tackifier (trade name "SUMILITERESIN PR-12603", rosin phenol-based resin, manufactured by Sumitomo Bakelite Co., Ltd.), and an ethyl acetate. Next, the coating liquid was applied onto a first substrate sheet (separator made of PET having a thickness of 38 µm) to form a coating film, and then, the coating film was dried on the substrate sheet to form a first layer (thickness of 5 µm) of a pressure-sensitive adhesive layer. On the other hand, a second layer of the pressure-sensitive adhesive layer was formed on a second substrate sheet (separator made of PET having a thickness of 38 µm) in the same manner as in the formation of the first layer of the pressure-sensitive adhesive layer, except that the gas generating particle dispersion liquid was not used and the thickness of the second layer was changed to 20 µm instead of 5 µm. Then, the exposed surface of the first layer on the first substrate sheet was bonded to the exposed surface of the second layer on the second substrate sheet to fabricate a pressure-sensitive adhesive sheet sandwiched between the first substrate sheet and the second substrate sheet. The composition regarding the first layer of the pressure-sensitive adhesive layer in Example 1 is shown in Table 1 (the same applies to each Example and Comparative Example to be described later). In Table 1, the unit of each numerical value representing the composition is "parts by mass".

### <Fabrication of Bonded Product>

First, the pressure-sensitive adhesive sheet was cut out into a size of 3 cm square to obtain a pressure-sensitive adhesive sheet piece. Next, after peeling the second substrate sheet on the second layer-side from the pressure-sensitive adhesive sheet piece, the pressure-sensitive adhesive sheet was bonded to a glass substrate (trade name "Large Slide Glass S9111", thickness of 1 mm, manufactured by Matsunami Glass Ind., Ltd.) on the second layer-side, and the glass and the pressure-sensitive adhesive sheet piece were compressively bonded by a compression bonding operation of one reciprocation of a 2-kg hand roller. Next, after peeling the first substrate sheet on the first layer-side of the pressure-sensitive adhesive sheet piece, a plurality of silicon chips as adherends were bonded to the first layer of the pressure-sensitive adhesive layer thus exposed, where each silicon chip had been cut out from a silicon wafer (thickness of 50 µm) in a size of 0.5 mm square. As described above, the bonded product of Example 1 was fabricated. The bonded product of Example 1 had a configuration in which the plurality of silicon chips were joined to the transparent glass substrate by the pressure-sensitive adhesive layer, and the pressure-sensitive adhesive layer had a lamination configuration of the first layer (5 µm) on the silicon chip-side and the second layer (20 µm) on the glass substrate-side.

### [Examples 2 and 3]

Each bonded product of Examples 2 and 3 was fabricated in the same manner as the bonded product of Example 1, except that in the formation of the first layer of the pressure-sensitive adhesive sheet (pressure-sensitive adhesive layer), the thickness thereof was changed to 10 µm (Example 2) or 20 µm (Example 3) instead of 5 µm.

### [Example 4]

A bonded product of Example 4 was fabricated in the same manner as the bonded product of Example 1, except that in the formation of the first layer of the pressure-sensitive adhesive sheet, 5 parts by mass of an ultraviolet absorber (trade name "KEMISORB 111", benzophenone-based ultraviolet absorber, manufactured by Chemipro Kasei Kaisha, Ltd.) was blended into the coating liquid, and the thickness of the first layer was changed to 10 µm instead of 5 µm.

### [Example 5]

A bonded product of Example 5 was fabricated in the same manner as the bonded product of Example 1, except that in the formation of the first layer of the pressure-sensitive adhesive sheet, the blending amount of the gas generating particles was changed to 50 parts by mass instead of 25 parts by mass, 20 parts by mass of an ultraviolet absorber (trade name "KEMISORB 111", manufactured by Chemipro Kasei Kaisha, Ltd.) was blended into the coating liquid, and the thickness of the first layer was changed to 10 µm instead of 5 µm.

### [Example 6]

A bonded product of Example 6 was fabricated in the same manner as the bonded product of Example 1, except that in the formation of the first layer of the pressure-sensitive adhesive sheet, the blending amount of the gas generating particles was changed to 10 parts by mass instead of 25 parts by mass.

### [Comparative Example 1]

A bonded product of Comparative Example 1 was fabricated in the same manner as the bonded product of Example 1, except that in the formation of the first layer of the pressure-sensitive adhesive sheet, the gas generating particle dispersion liquid was not used.

### [Comparative Example 2]

A bonded product of Comparative Example 2 was fabricated in the same manner as the bonded product of Example 1, except that in the formation of the first layer of the pressure-sensitive adhesive sheet, the gas generating particle dispersion liquid was not used, and 20 parts by mass of an ultraviolet absorber (trade name "KEMISORB 111", manufactured by Chemipro Kasei Kaisha, Ltd.) was blended into the coating liquid.

### <Maximum Gas Generation Amount>

A maximum gas generation amount was examined for each of the pressure-sensitive adhesive sheets of Examples and Comparative Examples. Specifically, 2 to 3-mg pressure-sensitive adhesive sheet piece (pressure-sensitive adhesive layers) cut out from the pressure-sensitive adhesive sheet was bonded to aluminum foil and then heated using a heating furnace-type pyrolyzer (DSP). In this heating, a temperature rising rate was set at 2°C/min, and a final temperature was set at 250°C. Then, an amount of gas generated in the DSP was measured by a gas chromatography mass spectrometry. In this method, a gas chromatography apparatus (trade name "6890Plus", manufactured by Agilent Technologies) was used for gas chromatography, a mass spectrometer (trade name "5973N", manufactured by Agilent Technologies) was used for mass spectrometry, and a gas generation amount was calculated as a decane-conversion value. Then, the maximum gas generation amount per gram of the solid content of the pressure-sensitive adhesive composition forming the pressure-sensitive adhesive layer (volume under the conditions of 0°C and 1 atm) was obtained from the gas generation amount per unit mass (1 g) of the pressure-sensitive adhesive sheet (pressure-sensitive adhesive layer), and then, the maximum gas generation amount (volume under the conditions of 0°C and 1 atm) per unit area (1 cm²) of the pressure-sensitive adhesive sheet was obtained. The maximum gas generation amount (µl/cm²) per unit area (1 cm²) of each pressure-sensitive adhesive sheet is shown in Table 1.

### <Pressure-Sensitive Adhesive Force>

A pressure-sensitive adhesive force was examined for each of the pressure-sensitive adhesive sheets (pressure-sensitive adhesive layers) of Examples and Comparative Examples as follows. First, the second substrate sheet was peeled from the pressure-sensitive adhesive sheet sandwiched between the first substrate sheet and the second substrate sheet, and a PET sheet (thickness of 25 µm) was bonded to the thus exposed second layer-side of the pressure-sensitive adhesive layer to obtain a laminate. Next, the pressure-sensitive adhesive sheet test piece (width of 20 mm × length of 100 mm) was cut out from the laminate. Next, the first substrate sheet was peeled from the pressure-sensitive adhesive sheet test piece, the first layer-side thus exposed was bonded to a SUS plate (SUS304) as an adherend under the environment of 23°C, and the test piece was compressively bonded to the adherend by a compression bonding operation of one reciprocation of a 2-kg roller. Then, the resulting product was left to stand for 30 minutes under the environment of 23°C, and then, the pressure-sensitive adhesive force (N/20mm) of the pressure-sensitive adhesive sheet test piece with respect to the SUS plate was measured using a tensile testing machine (trade name "Autograph AGS-J", manufactured by Shimadzu Corporation). In this measurement, a measurement temperature was set at 23°C, a peeling angle of the test piece with respect to the SUS plate was set at 180°, and a tensile rate of the pressure-sensitive adhesive sheet test piece was set at 300 mm/min. The results are shown in Table 1.

### <Transmittance>

A transmittance was examined for each of the pressure-sensitive adhesive sheets (pressure-sensitive adhesive layers) of Examples and Comparative Examples. The transmittance of the pressure-sensitive adhesive sheet (pressure-sensitive adhesive layer) was examined in a state of a laminate after the pressure-sensitive adhesive sheet was compressively bonded to glass and the first substrate sheet was peeled, and before a silicon chip was bonded. Specifically, first, a light transmittance over a wavelength range of 280 nm to 800 nm of the pressure-sensitive adhesive sheet on the glass was measured using a spectrophotometer (trade name "Spectrophotometer U-4100", manufactured by Hitachi High-Tech Science Corporation). The transmittance (%) at a wavelength of 355 nm in the pressure-sensitive adhesive sheet itself is shown in Table 1.

### <Releasability>

The releasability of the silicon chip was examined for each of the bonded products of Examples and Comparative Examples. Specifically, a peeling test was carried out in which partial heating was carried out for one silicon chip attachment region of the pressure-sensitive adhesive layer by laser light irradiation through the glass substrate of the bonded product, using a laser irradiator (trade name "5335XI", manufactured by ESI Japan, Ltd.), and whether the silicon chip (0.5 mm square) attached to the region was released or not was examined. In this test, a laser beam (beam diameter of 45 µm) having a wavelength of 355 nm, which is pulsed, was used as an irradiation laser light. A repetition frequency of the pulse was set at 90 kHz. The partial heating with respect to one silicon chip attachment region (0.5 mm× 0.5 mm) was carried out by sweeping the irradiation site or spot of the laser beam over the entire region. Specifically, rectangular sweeping in which the laser beam irradiation spot was swept along four sides of a square in a predetermined size was carried out repeatedly over different square sizes so as to form concentric rectangles continuous from the central portion to the outermost of the silicon chip attachment region. For each bonded product, a peeling test at the irradiation energy of 350 mJ/cm² for one silicon chip attachment region, a peeling test at the irradiation energy of 630 mJ/cm² for another silicon chip attachment region, furthermore, a peeling test at the irradiation energy of 840 mJ/cm² for another silicon chip attachment region, and moreover, a peeling test at the irradiation energy of 1260 mJ/cm² for another silicon chip attachment region were carried out (irradiation energy may be controlled by adjusting the irradiation energy per pulse of the laser beam in the device for use). Then, regarding the releasability of the silicon chip from the pressure-sensitive adhesive layer, a case where the silicon chip was released from the pressure-sensitive adhesive layer by the laser light irradiation was evaluated as "Excellent", and a case where the silicon chip was not released was evaluated as "Bad". The evaluation results are shown in Table 1.

### [Table 1]

**Table 1**

| | Pressure-Sensitive Adhesive Component | | | Gas Generating Particles | Ultraviolet Absorber | Thickness of First Layer (µm) | Maximum Gas Generation Amount (µl/cm²) | Pressure-Sensitive Adhesive Force (N/20 mm) | Transmittance (355 nm) (%) | Irradiation Energy | | | |
|---|---|---|---|---|---|---|---|---|---|---|---|---|---|
| | Acrylic Polymer | Is ocyanate- Based Cross-Linking Agent | Tackifier | | | | | | | 350 mJ/cm² | 630 mJ/cm² | 840 mJ/cm² | 1260 mJ/cm² |
| Ex.1 | 100 | 3 | 10 | 25 | - | 5 | 10.9 | 3.1 | 48.3 | Bad | Bad | Excellent | Excellent |
| Ex. 2 | 100 | 3 | 10 | 25 | - | 10 | 21.0 | 2.2 | 30.6 | Bad | Bad | Excellent | Excellent |
| Ex. 3 | 100 | 3 | 10 | 25 | - | 20 | 39.6 | 2.8 | 9.8 | Bad | Excellent | Excellent | Excellent |
| Ex. 4 | 100 | 3 | 10 | 25 | 5 | 10 | 20.4 | 2.4 | 1.2 | Excellent | Excellent | Excellent | Excellent |
| Ex. 5 | 100 | 3 | 10 | 50 | 20 | 10 | 31.0 | 2.1 | 0.2 | Excellent | Excellent | Excellent | Excellent |
| Ex. 6 | 100 | 3 | 10 | 10 | - | 5 | 5.1 | 5.8 | 80.3 | Bad | Bad | Bad | Excellent |
| Comparative Ex. 1 | 100 | 3 | 10 | - | - | 5 | 0.0 | 6.9 | 100 | Bad | Bad | Bad | Bad |
| Comparative Ex. 2 | 100 | 3 | 10 | - | 20 | 5 | 0.0 | 6.8 | 0 | Bad | Bad | Bad | Bad |

### INDUSTRIAL APPLICATION

The method for releasing an adherend of the present invention can be, for example, used for peeling a pressure-sensitive adhesive sheet, bonded to an electronic component, in a production process of the electronic component such as a semiconductor component. The pressure-sensitive adhesive composition of the present invention can be used for fabricating a pressure-sensitive adhesive sheet used in the method.

### Description of Reference Numerals

- 100: Bonded product
- X: Pressure-sensitive adhesive sheet
- 10: Pressure-sensitive adhesive layer
- 11, 12: Surface
- 10A: First layer
- 10B: Second layer
- 20: Adherend
- 30: Transparent substrate
- L: Laser light

## Claims

1. A method for releasing an adherend, the method comprising:
a first step of preparing a bonded product including a pressure-sensitive adhesive layer and a plurality of adherends bonded to the pressure-sensitive adhesive layer, the pressure-sensitive adhesive layer containing a pressure-sensitive adhesive component and a gas generating agent; and
a second step of irradiating a laser light to the pressure-sensitive adhesive layer-side of the bonded product to heat a part of the pressure-sensitive adhesive layer.

2. The method for releasing an adherend according to claim 1,
wherein a transmittance of the laser light in the pressure-sensitive adhesive layer is 85% or less.

3. The method for releasing an adherend according to claim 1,
wherein a wavelength of the laser light is 351 nm or 355 nm.

4. A pressure-sensitive adhesive composition used for forming a pressure-sensitive adhesive layer in the method for releasing an adherend according to claim 1.

5. The pressure-sensitive adhesive composition according to claim 4,
wherein the pressure-sensitive adhesive layer contains a component capable of absorbing the laser light.

6. The pressure-sensitive adhesive composition according to claim 5,
wherein the component is an ultraviolet absorber.

7. The pressure-sensitive adhesive composition according to claim 4,
wherein the gas generating agent is a gas generating particle.

8. The pressure-sensitive adhesive composition according to claim 7,
wherein the gas generating particle includes an azo compound particle.
